Europäisches Patentamt

European Patent Office

Office européen des brevets

(19)

(11) Veröffentlichungsnummer: **0 135 933**
**B1**

(12) **EUROPÄISCHE PATENTSCHRIFT**

(45) Veröffentlichungstag der Patentschrift :
03.01.90

(21) Anmeldenummer : 84111477.0

(22) Anmeldetag : 26.09.84

(51) Int. Cl.⁵ : **G 01 C 17/30**

(54) **Magnetfeldsonde.**

(30) Priorität : 29.09.83 DE 3335333

(43) Veröffentlichungstag der Anmeldung :
03.04.85 Patentblatt 85/14

(45) Bekanntmachung des Hinweises auf die Patenterteilung : 03.01.90 Patentblatt 90/01

(84) Benannte Vertragsstaaten :
AT BE DE FR IT NL

(56) Entgegenhaltungen :
FR—A— 2 284 122
GB—A— 988 964
PATENTS ABSTRACTS OF JAPAN, Band 6, Nr. 34 (P-104)[912], 2. März 1982; & JP-A-56 154 610 (TAIYOU MUSEN K.K.) 30-11-1981.

(73) Patentinhaber : Siemens Aktiengesellschaft
Wittelsbacherplatz 2
D-8000 München 2 (DE)

(72) Erfinder : Kappeller, Reinhard
Geigenbergerstrasse 27
D-8000 München 21 (DE)
Erfinder : Thilo, Peer, Dr. Ing.
Buchhierlstrasse 19
D-8000 München 71 (DE)

## Beschreibung

Die Erfindung bezieht sich auf eine Magnetfeldsonde zur Bestimmung der Richtungskomponenten eines Magnetfeldes mit mehreren Wicklungen und einem Kernblech, das mehrere in einer Ebene liegende Polflächen mit jeweils einem großen Ein- und Austrittsquerschnitt für den magnetischen Fluß und schmale Verbindungsstege zwischen den Polflächen aufweist, wobei jeweils zwischen zwei Polflächen ein von außen her frei zugänglicher Einschnitt gebildet ist und die Breite bzw. Größe der Polflächen ein Mehrfaches der Breite bzw. Größe der Stege beträgt.

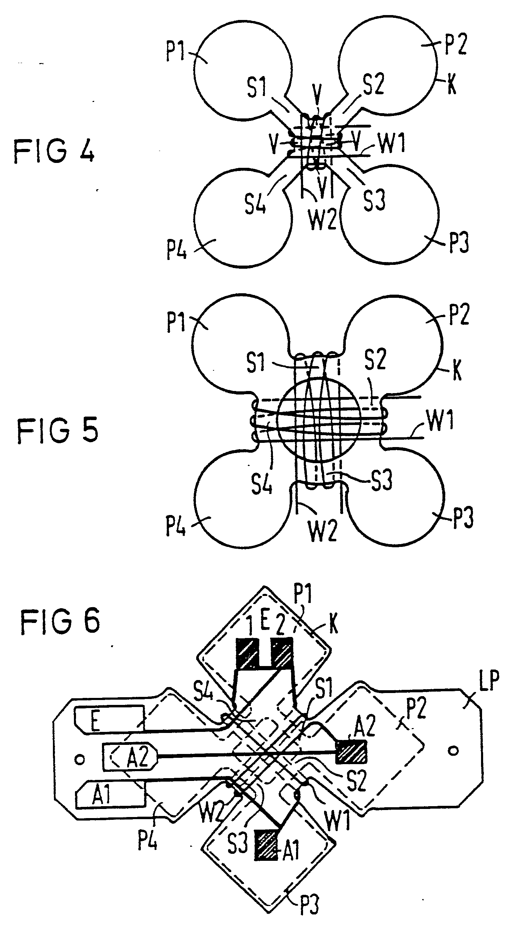

Eine derartige Magnetfeldsonde ist aus der DE-PS 29 46 640 bekannt. Dort ist eine Sonde mit mehreren Polflächen, mehreren Stegen und mehreren Wicklungen zur Bestimmung der Richtung eines Magnetfeldes beschrieben. So ist dort beispielsweise in der Fig. 6 und im Anspruch 8 eine Sonde dargestellt und beschrieben, bei der das Kernblech vier Stege mit je einer Wicklung aufweist, wobei die Stege die Seiten eines Parallelogramms mit jeweils einer Polfläche an jeder Ecke bilden. Eine derartig ausgebildete Magnetfeldsonde hat jedoch den entscheidenden Nachteil, daß vier Wicklungen vorgesehen sind, die als Ringwicklungen ausgebildet sein müssen. Diese Ringwicklungen sind insbesondere bei der Kleinheit der Sonde bzw. des Kernblechs aus sehr dünnen Draht von beispielsweise 0,05 mm Drahtstärke gewickelt. Das Kernblech selbst kann beispielsweise eine Kantenlänge von 15 mm aufweisen und dabei die Stegbreite weniger als 1 mm betragen. Dies erfordert einen sehr sorgfältigen und äußerst zeitaufwendigen Wickelvorgang, was nachteilig zur Folge hat, daß eine derartige Sonde aufgrund der Ringwicklung sehr hohe Kosten erreicht. Dabei ist das Kernblech kostengünstig zu fertigen, weil es vorzugsweise nur aus einem einzigen flachen Blechstück besteht, das einfach, beispielsweise durch Stanzen gefertigt werden kann. Weiterhin ist es nachteilig, daß für jeden Steg jeweils eine Wicklung anzubringen ist. Zur Vermeidung derartiger Ringwicklungen wurde deshalb in dieser DE-PS 29 46 640 schon eine Ausbildungsform des Kernblechs wie dort in Fig. 5 und Anspruch 7 dargestellt und beschrieben, vorgeschlagen. Dort ist das Kernblech von vier kreuzförmig verbundenen Stegen mit jeweils einer Wicklung gebildet, wobei am freien Ende der Stege jeweils mittig eine spatenförmige Polfläche angeordnet ist. Dabei weist jeder der vier Stege eine solche Länge auf, daß jeder Steg frei bewickelbar ist. Dies hat jedoch den Nachteil, daß aufgrund der längeren Stege des Kernblechs, insbesondere wenn es unmittelbar an den Polflächen bewickelt ist mechanisch recht instabil ist. Außerdem sind bei dieser Sonde vier Wicklungen vorzusehen, nämlich für jeden Steg eine eigene Wicklung. Ein weiterer Nachteil ist durch die langen Stege auch bezüglich des Magnetflußes gegeben. Einerseits führt die Streuung des Magnetfeldes zu störenden Beeinflussungen, zum anderen Gerät bei dieser Anordnung (Steglänge steht in einem ungünstigen Verhältnis zur Polfläche) der Kern zu schnell in die Sättigung.

Aufgabe der Erfindung ist es daher, oben geschilderte Nachteile zu vermeiden und eine Magnetfeldsonde der eingangs beschriebenen Art so auszubilden, daß sie einfach und kostengünstig zu fertigen ist, wobei das Kernblech die notwendige Stabilität aufweisen und die Anzahl der Wicklungen reduziert sein soll. Dabei soll ein freies Bewickeln der Stege möglich sein. Diese Aufgabe wird erfindungsgemäß dadurch gelöst, daß die Wicklungen kreuzförmig über den Stegen angeordnet sind.

Aufgrund der über den Stegen kreuzförmig angeordneten Wicklungen ist die Anzahl der Wicklungen reduziert. Zudem erfolgt die Bewicklung frei von außen her innerhalb der Einschnitte, die frei zugänglich zwischen den Polflächen angeordnet sind. Die Vermeidung einer Ringwicklung und die Reduzierung der Wicklungen erlauben eine einfache, schnelle und damit kostengünstige Fertigung derartiger Magnetfeldsonden.

Verschiedene vorteilhafte Ausführungsformen der Magnetfeldsonden sind durch die abhängigen Patentansprüche gekennzeichnet. So kann das Kernblech vorteilhafter Weise mehrere kreisförmige Polflächen aufweisen, an die radial die Stege angeformt sind. Die Stege bilden dabei einen Stern oder beispielsweise bei vier Polflächen, ein Kreuz. Über dem Stegstern bzw. dem Stegkreuz kann dann in einfacher Weise frei zugänglich jeweils eine Wicklung kreuzförmig bzw. sternförmig angebracht werden. Die kreisförmigen Polflächen können auch mit tangential angeformten Stegen verbunden sein, wobei die Stege annähernd einen Kreisring bilden. Bei dieser Ausführungsform sind zweckmäßiger Weise jeweils eine Wicklung über zwei gegenüberliegende Stegringsegmente angebracht.

Eine bevorzugte Ausführungsform der erfindungsgemäßen Magnetfeldsonde ist durch ein Kernblech gebildet, daß vier annähernd quadratische Polflächen mit vier jeweils an einer Ecke der Polfläche angeformten Stegen aufweist. Dabei bilden die vier Stege die vier Seiten eines Quadrates. Über jeweils zwei gegenüberliegende, also achsenparallele Stege ist jeweils eine Wicklung angeordnet. Die beiden Wicklungen befinden sich also kreuzförmig in den Einschnitten. Diese Sonde zeichnet sich durch eine kompakte, mechanisch stabile Form aus, die einerseits einfach zu bewickeln ist und andererseits ein günstiges Verhalten der magnetischen Flüsse aufweist.

Eine weitere, vorteilhafte Ausführungsform der erfindungsgemäßen Magnetfeldsonde ist durch ein Kernblech gegeben, das ebenfalls vier annähernd quadratische Polflächen mit jeweils an einer Ecke der Polfläche, jedoch diagonal dazu, angeformte Stege aufweist. Diese vier Stege bilden ein Kreuz mit jeweils gleicher Steglänge, wie an sich bekannt, wobei jedoch zwei Wicklungen kreuzförmig über dem Stegkreuz angeordnet sind.

Eine andere zweckmäßige Ausgestaltung der Erfindung weist vier drachenförmige Polflächen auf, an deren spitzwinkligen Ecken jeweils die Stege angeformt sind, die ein Kreuz mit jeweils gleicher Steglänge bilden. Bei dieser Ausführungsform sind die kreuzförmigen Wicklungen ebenfalls über dem Stegkreuz angeordnet. Für die beiden letztgenannten Ausführungsformen ist es dabei besonders vorteilhaft, im jeweiligen Zwickel zwischen den Stegen ein Verstärkungsstück in der Kernblechebene auszuformen. Diese Anformung ist sowohl für die Wicklung als auch für den Magnetfluß zweckmäßiger, zum anderen sind die Stege dadurch stabiler.

Anhand der Zeichnung werden mehrere Ausführungsbeispiele kurz beschrieben. Dabei zeigen die

Fig. 1 und 2 eine Magnetfeldsonde mit vier annähernd quadratischen Polflächen,

Fig. 3 eine Magnetfeldsonde mit vier drachenförmigen Polflächen,

Fig. 4 und 5 eine Magnetfeldsonde mit kreisförmigen Polflächen und

Fig. 6 eine Magnetfeldsonde mit Kernblech und Wicklungen auf einer Leiterplatte.

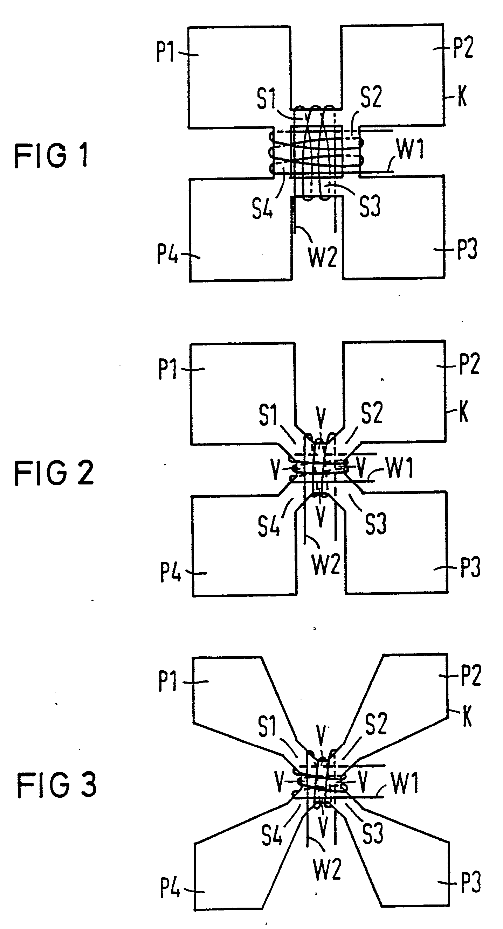

In Fig. 1 ist ein Kernblech K mit vier Polflächen P1 bis P4 dargestellt. Die Polflächen sind annähernd quadratisch und können eine Kantenlänge von beispielsweise 6 mm aufweisen. An einer Ecke einer Polfläche sind jeweils zwei Stege angeformt, die parallel zu den Seitenkanten der quadratförmigen Polflächen verlaufen. So sind die Polflächen P1 und P2 mit dem schmalen Steg S1 verbunden, die Polflächen P2 und P3 mit dem Steg S2, usw. verbunden. Der Steg kann dabei eine Länge von 3 mm und eine Breite von 1 mm aufweisen. In den von außen frei zugänglichen Einschnitten zwischen jeweils zwei Polflächen ist über den Stegen eine offene Wicklung angebracht. Über die beiden parallelen Stegen S2 und S4 ist eine erste Wicklung W1 angebracht. Dazu ist um 90° versetzt die zweite Wicklung W2 über die beiden achsenparallelen Stege S1 und S3 angebracht. Gegenüber der bekannten Sonde hat die erfindungsgemäße Sonde nur zwei offene, d. h. frei wickelbare, über Kreuz angeordnete Wicklungen. Diese sind erheblich kostengünstiger zu wickeln als vier Ringwicklungen. Die vier Verbindungsstege sind in vorteilhafter Weise jeweils an der Ecke einer Polfläche angebracht, so daß der Abstand zweier gegenüberliegender, achsenparalleler Verbindungsstege gegenüber der bekannten Magnetfeldsonde geringer ist. Dadurch ist auch eine wesentlich geringere Drahtlänge für eine Wicklung erforderlich.

In Fig. 2 ist eine Magnetfeldsonde mit einem Kernblech ähnlich der Fig. 1 dargestellt. Das Kernblech weist vier annähernd quadratische Polflächen P1 bis P4 auf, die in einer Ebene liegen. Die Verbindungsstege sind jedoch diagonal zur Polfläche an den Ecken angeformt und bilden ein Stegkreuz mit jeweils gleich langen Stegen S1 bis S4. In den jeweiligen Zwickeln (Winkel von 90°) zwischen zwei Stegen ist ein Verstärkungsstück V in der Kernblechebene angeformt, das nicht nur die Stabilität des Kernbleches K erhöht, sondern auch eine günstigere Kante am Stegkreuz für die kreuzförmig angeordneten Wicklungen W1 und W2 bildet.

In Fig. 3 ist ein weiteres Beispiel für die Form des Kernblechs K mit vier Polflächen P1 bis P4 dargestellt. Die Polflächen haben die Form eines Drachens, an den spitzen Winkeln sind die Stege S1 bis S4 angeformt, die ähnlich wie in Fig. 2 ein Stegkreuz mit je einem Verstärkungsstück V im jeweiligen Zwickel bilden, über dem die kreuzförmig angeordneten Wicklungen W1 und W2 angebracht sind.

Die Fig. 4 zeigt wiederum am Beispiel von vier Polflächen P1 bis P4 ein Kernblech K mit kreuzförmigen Stegen S1 bis S4. Die Polflächen P1 bis P4 sind kreisförmig, die Stege daran radial angeformt. Über dem Stegkreuz sind die kreuzförmig angeordneten Wicklungen W1 und W2 angebracht.

In Fig. 5 ist ein Kernblech K mit vier Polflächen P1 bis P4 dargestellt bei dem die Polflächen ebenfalls kreisförmig sind. Die Stege S1 bis S4 jedoch sind tangential an den Polflächen angeformt und bilden einen Stegring. Jeweils eine Wicklung W1 und W2 ist kreuzförmig über zwei gegenüberliegende Stegringsegmente angeordnet.

Das Kernblech der Fig. 1 bis 5 hat annähernd die Form eines vierblättrigen Kleeblattes. Es sind auch Formen des Kernblechs möglich bei denen weniger oder auch mehr Polflächen vorgesehen werden können, die jeweils mit Verbindungsstegen verbunden sind und zwischen jeweils zwei Polflächen einen Einschnitt aufweisen, in dem über dem bzw. den Stegen jeweils eine Wicklung frei wickelbar angebracht werden kann. Die Wicklungen sind dann zueinander sternförmig über Kreuz angeordnet.

In Fig. 6 ist ein Kernblech K gemäß der Fig. 1 gestrichelt an der Unterseite einer Leiterplatte LP dargestellt. Die Leiterplatte LP ist entsprechend dem Kernblech K ausgebildet und weist ebenfalls vier Einschnitte zwischen den Polflächen P1 bis P4 auf. Die Leiterplatte LP ist auf zwei gegenüberliegenden Seiten über die Polflächen P2 und P4 hinaus verlängert. Damit kann die Leiterplatte LP mit dem Kernblech K und den kreuzförmigen Wicklungen W1 und W2 beispielsweise in einem kleinen Gehäuse befestigt werden. Auf der Oberseite der Leiterplatte LP können die Anschlußpunkte A1, A2 und E angebracht sein, an die einerseits die Drahtenden der Wicklungen W1, W2 angelötet werden können und von denen andererseits die Leiterbahnen zu den Anschlußpunkten A'1, A'2 und E' führen, an die direkt ein Stecker angesteckt werden kann. Die Polflächen sind mit P1 bis P4 und ebenso die Stege mit S1 bis S4 bezeichnet. Die beiden kreuzförmig angeordneten Wicklungen W1 und W2 sind hier mit jeweils nur einer Windung dargestellt; in Wirklichkeit weist eine Wicklung eine Vielzahl von Drahtwindungen auf.

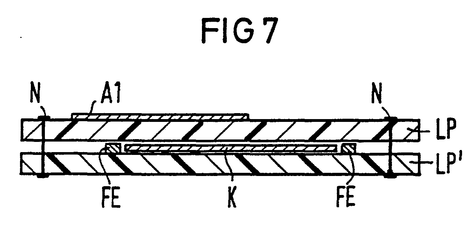

In einer weiteren zweckmäßigen Ausführungsform ist das Kernblech K der Magnetfeldsonde zwischen zwei Leiterplatten LP und LP' angeordnet. Dabei ist die eine Leiterplatte gemäß der in Fig. 6 dargestellten Leiterplatte LP ausgebildet. Die zweite Leiterplatte LP' weist dieselbe Form wie die Leiterplatte LP nach der Fig. 6 auf. Auf der zweiten Leiterplatte LP' sind auf der dem Kernblech K zugewandten Seite, außerhalb des Kernblechs K Führungselemente FE für das Kernblech K angeordnet. Diese können von mehreren Leiterbahnpunkten oder kurzen Leiterbahnstrekken gebildet sein. Dabei ist die Höhe der Führungspunkte FE gleich der oder größer als die Dicke des Kernbleches K. Diese Anordnung ist in Fig. 7 als Schrittzeichen dargestellt. Die beiden Leiterplatten LP und LP' sind außerhalb des Kernbleches K und der Anschlußpunkte, z. B. Ä, mechanisch miteinander verbunden, beispielsweise mit Nieten N.

Die Wicklungen sind wie bei Fig. 6 sternförmig zwischen den Polflächen über den Leiterplatten angeordnet.

## Patentansprüche

1. Magnetfeldsonde zur Bestimmung der Richtungskomponenten eines Magnetfeldes mit mehreren Wicklungen (W1, W2) und einem Kernblech (K), das mehrere in einer Ebene liegende Polflächen (P1, P2, ...) mit jeweils einem großen Ein- und Austrittsquerschnitt für den magnetischen Fluß und schmale Verbindungsstege (S1, S2, ...) zwischen den Polflächen (P1, P2, ...) aufweist, wobei jeweils zwischen zwei Polflächen ein von außen her frei zugänglicher Einschnitt gebildet ist und die Breite bzw. Größe der Polflächen ein Mehrfaches der Breite bzw. der Größe der Stege beträgt, dadurch gekennzeichnet, daß die Wicklungen (W1, W2) kreuzförmig über den Stegen (S1 bis S4) angeordnet sind.

2. Magnetsonde nach Anspruch 1, dadurch gekennzeichnet, daß das Kernblech (K) kreisförmige Polflächen (P1 bis P4) mit radial angeformten Stegen (S1 bis S4) aufweist, wobei die Stege sternförmig angeordnet und kreuz- bzw. sternförmig angeordnete Wicklungen (W1, W2) über dem Stegstern in den Einschnitten angebracht sind.

3. Magnetfeldsonde nach Anspruch 1, dadurch gekennzeichnet, daß das Kernblech kreisförmige Polflächen mit tangential angeformten Stegen aufweist, wobei die Stege ringförmig angeordnet sind und jeweils eine Wicklung über zwei gegenüberliegende Steg-Ringsegmente in den Einschnitten angebracht ist.

4. Magnetfeldsonde nach Anspruch 1, dadurch gekennzeichnet, daß das Kernblech annähernd quadratische Polflächen mit vier jeweils an einer Ecke der Polfläche angeformten Stegen aufweist und daß die vier Stege die Seiten eines Quadrates bilden, wobei jeweils eine Wicklung über zwei achsenparallele Stege in den Einschnitten angeordnet ist.

5. Magnetfeldsonde nach Anspruch 1, dadurch gekennzeichnet, daß das Kernblech vier annähernd quadratische Polflächen mit vier jeweils an einer Ecke der Polfläche angeformten Stegen aufweist und daß die vier Stege ein Kreuz mit jeweils gleicher Steglänge bilden, wobei zwei kreuzförmig angeordnete Wicklungen über dem Stegkreuz in den Einschnitten angebracht sind.

6. Magnetfeldsonde nach Anspruch 1, dadurch gekennzeichnet, daß das Kernblech vier drachenförmige Polflächen mit vier jeweils an der spitzwinkligen Ecke der Polfläche angeformten Stegen aufweist und daß die vier Stege ein Kreuz mit jeweils gleicher Steglänge bilden, wobei zwei kreuzförmig angeordnete Wicklungen über dem Stegkreuz in den Einschnitten angebracht sind.

7. Magnetfeldsonde nach Anspruch 5 oder 6, dadurch gekennzeichnet, daß im jeweiligen Zwickel zwischen zwei Stegen (S1, S2, S3, S4) ein Verstärkungsstück (V) in der Kernblechebene angeformt ist.

8. Magnetfeldsonde nach einem der vorhergehenden Ansprüche, dadurch gekennzeichnet, daß das Kernblech annähernd die Form eines Kleeblattes besitzt.

9. Magnetfeldsonde nach einem der Ansprüche 1 bis 8, dadurch gekennzeichnet, daß das Kernblech (K) auf einer Leiterplatte (LP) angeordnet ist, die auf der dem Kernblech (K) gegenüberliegenden Seite Leiterbahnen und Anschlußpunkte (A1, A2 ; E, E1, E2) aufweist und im wesentlichen entsprechend der Konturen des Kernbleches (K) ausgebildet ist.

10. Magnetfeldsonde nach Anspruch 9, dadurch gekennzeichnet, daß eine weitere Leiterplatte (LP') vorgesehen ist, die die Form der ersten Leiterplatte (LP) und auf der dem Kernblech (K) zugewandten Seite Führungselemente (FE) für das Kernblech (K) aufweist, daß das Kernblech (K) zwischen den beiden Leiterplatten (LP und LP') angeordnet ist und daß die Leiterplatten (LP und LP') außerhalb des Kernbleches miteinander verbunden sind.

## Claims

1. Magnetic field probe for determining the direction components of a magnetic field having a plurality of windings (W1, W2) and a core plate (K), which has a plurality of pole faces (P1, P2, ...) lying in a plane with, in each case, a large entry cross-section and a large exit cross-section for the magnetic flux, and narrow connecting webs (S1, S2, ...) between the pole faces (P1, P2, ...), there being formed in each case between two pole faces an indentation which is freely accessible from outside, and the width or the size of the pole faces amounting to a multiple of the width or the size of the webs, characterized in that the windings (W1, W2) are arranged crosswise over the webs (S1 to S4).

2. Magnetic probe according to Claim 1, characterized in that the core plate (K) has circular pole faces (P1 to P4) with radially integrally formed webs (S1 to S4), the webs being arranged starwise, and windings (W1, W2) arranged crosswise or starwise being fitted in the indentations over the web star.

3. Magnetic field probe according to Claim 1, characterized in that the core plate has circular pole faces with tangentially arranged webs, the webs being arranged annularly, and one winding being fitted in each case in the indentations over two opposite web-ring segments.

4. Magnetic field probe according to Claim 1, characterized in that the core plate has approximately square pole faces with four webs integrally formed in each case at a corner of the pole face, and in that the four webs form the sides of a square, one winding being arranged in each case in the indentations over two axially parallel webs.

5. Magnetic field probe according to Claim 1, characterized in that the core plate has four approximately square pole faces with four webs integrally formed in each case at a corner of the pole face, and in that the four webs form a cross with the same web length in each case, two windings arranged crosswise being fitted in the indentations over the web cross.

6. Magnetic field probe according to Claim 1, characterized in that the core plate has four kite-shaped pole faces with four webs integrally formed in each case at the acute-angled corner of the pole face, and in that the four webs form a cross with the same web length in each case, two windings arranged crosswise being fitted in each case in the indentations over the web cross.

7. Magnetic field probe according to Claim 5 or 6, characterized in that a reinforcing piece (V) is integrally formed in the plane of the core plate in the respective gap between two webs (S1, S2, S3, S4).

8. Magnetic field probe according to one of the preceding claims, characterized in that the core plate has approximately the form of a clover leaf.

9. Magnetic field probe according to one of Claims 1 to 8, characterized in that the core plate (K) is arranged on a printed-circuit board (LP), which has conductor tracks and connecting points (A1, A2 ; E, E1, E2) on the side opposite the core plate (K) and is essentially constructed in conformity with the contours of the core plate (K).

10. Magnetic field probe according to Claim 9, characterized in that a further printed-circuit board (LP') is provided, which has the form of the first printed-circuit board (LP) and, on the side facing the core plate (K), guide elements (FE) for the core plate (K), in that the core plate (K) is arranged between the two printed-circuit boards (LP and LP'), and in that the printed-circuit boards (LP and LP') are connected to other outside the core plate.

## Revendications

1. Sonde magnétique pour déterminer les composantes directionnelles d'un champ magnétique, comprenant plusieurs enroulements (W1, W2) et une tôle formant noyau (K) qui présente plusieurs surfaces polaires (P1, P2, ...) situées dans un plan et ayant de grandes sections d'entrée et de sortie pour le flux magnétique, ainsi que des barrettes de liaison (S1, S2, ...) étroites entre les surfaces polaires (P1, P2, ...) une encoche librement accessible de l'extérieur étant ménagés chaque fois entre deux surfaces polaires et la largeur ou la grandeur des surfaces polaires correspondant à un multiple de la largeur ou de la grandeur des barrettes, caractérisée en ce que les enroulements (W1, W2) sont disposés en croix par-dessus les barrettes (S1 à S4).

2. Sonde selon la revendication 1, caractérisée en ce que la tôle (K) présente des surfaces polaires circulaires (P1 à P4) sur lesquelles sont formées radialement des barrettes (S1 à S4), les barrettes étant disposées en étoile et les enroulements (W1, W2) étant disposés en croix ou en étoile dans les encoches et par-dessus l'étoile ou le croisillon formé par les barrettes.

3. Sonde selon la revendication 1, caractérisée en ce que la tôle présente des surfaces polaires circulaires sur lesquelles des barrettes sont formées tangentiellement, de manière à former un anneau, et chaque enroulement est disposé dans les encoches et par-dessus deux segments opposés de l'anneau formé par les barrettes.

4. Sonde selon la revendication 1, caractérisée en ce que la tôle présente des surfaces polaires à peu prés carrées et quatre barrettes formées chacune sur un sommet d'une surface polaire, et que les quatre barrettes constituent les côtés d'un carré, un enroulement étant disposé chaque fois par-dessus deux barrettes à axe parallèle, dans les encoches.

5. Sonde selon la revendication 1, caractérisée en ce que la tôle présente quatre surfaces polaires à peu prés carrées et quatre barrettes formées chacune sur un sommet d'une surface polaire et que les quatre barrettes constituènt une croix et possèdent la même longueur, deux enroulements étant disposés en croix, chacun par-dessus la croix constituée par les barrettes et dans les encoches.

6. Sonde selon la revendication 1, caractérisée en ce que la tôle présente quatre surfaces polaires en forme de cerf-volant et quatre barrettes formées chacune au sommet à angle aigu d'une surface polaire, et que les quatre barrettes constituent une croix et possèdent la même longueur, deux enroulements étant disposés en croix par-dessus la croix constituée par les barrettes et dans les encoches.

7. Sonde selon la revendication 5 ou 6, caractérisée en ce qu'un gousset de renfort (4) est réalisé dans le plan de la tôle dans chaque coin entre deux barrettes (S1, S2, S3, S4).

8. Sonde selon une des revendications précédentes, caractérisée en ce que la tôle possède à peu près la forme d'une trèfle.

9. Sonde selon une des revendications 1 à 8, caractérisée en ce que la tôle (K) est disposée sur une plaquette à circuits imprimés (LF) qui porte des pistes conductives et des points de connexion (A1, A2 ; E, E1, E2) sur la surface opposée à la tôle (K) et dont la forme correspond essentiellement au contour de la tôle formant noyau (K).

10. Sonde selon la revendication 9, caractérisée en ce qu'elle comprend une plaquette à circuits imprimés (LP') supplémentaire qui possède la forme de la première plaquette à circuits imprimés (LP) et dont le côté dirigé vers la tôle (K) porte des éléments de guidage (FE) pour cette tôle, que la tôle formant noyau (K) est placée entre les deux plaquettes à circuits imprimés (LP et LP') et que ces plaquettes sont reliées l'une à l'autre à l'extérieur de la tôle.

FIG 1

FIG 2

FIG 3

EP 0 135 933 B1

FIG 4

FIG 5

FIG 6

2

## FIG 7